# EUROPÄISCHE PATENTSCHRIFT

(11) **EP 3 516 761 B1**
(45) Veröffentlichungstag und Bekanntmachung des Hinweises auf die Patenterteilung: **15.09.2021**
(21) Anmeldenummer: 17745260.4
(22) Anmeldetag: 20.07.2017
(51) Int. Cl.: H02M 7/00, H02M 7/493, H02P 5/74, H05K 7/14, H02M 1/00

(54) **SYSTEM, UMFASSEND EINEN ERSTEN WECHSELRICHTER UND EINEN ZWEITEN WECHSELRICHTER, UND EIN VERFAHREN ZUM BETREIBEN DES SYSTEMS**
SYSTEM, COMPRISING A FIRST INVERTER AND A SECOND INVERTER, AND A METHOD FOR OPERATING THE SYSTEM
SYSTÈME, COMPRENANT UN PREMIER INVERSEUR ET UN DEUXIÈME INVERSEUR, ET PROCÉDÉ DE FONCTIONNEMENT DU SYSTÈME

(30) Priorität: 22.09.2016 DE 102016011426
(43) Veröffentlichungstag der Anmeldung: 31.07.2019
(73) Patentinhaber: SEW-Eurodrive GmbH & Co, 76646 Bruchsal (DE)
(72) Erfinder: SCHMIDT, Josef, 76676 Graben-Neudorf (DE); ZÖLLER, Thomas, 76646 Bruchsal (DE); SCHÄFER, Jens, 76676 Graben-Neudorf (DE); HAUCK, Matthias, 68723 Schwetzingen (DE)
(74) Vertreter: Tüngler, Eberhard
(86) Internationale Anmeldenummer: PCT/EP2017/025218
(87) Internationale Veröffentlichungsnummer: WO 2018/054544

(56) Entgegenhaltungen:
- EP-A1- 2 112 014
- EP-A2- 2 811 633
- WO-A1-2016/127650
- DE-A1-102011 003 572
- DE-A1-102012 212 946
- JP-A- 2002 051 589
- JP-A- 2007 318 981
- JP-A- 2015 133 843
- US-A1- 2014 198 475

## Beschreibung

Die Erfindung betrifft ein System, umfassend einen ersten Wechselrichter und einen zweiten Wechselrichter und ein Verfahren zum Betreiben des Systems.

Es ist allgemein bekannt, dass ein Wechselrichter einen Elektromotor speist und von einem Gleichrichter an seinem gleichspannungsseitigen Anschluss versorgbar ist.

Aus der DE10 2006 033 562 B3 ist als nächstliegender Stand der Technik eine Servopresse mit Energiemanagement bekannt.

Aus der DE10 2010 023 536 A1 ist eine Vorrichtung und Verfahren zur intelligenten antriebsbasierten Netzleistungsregulierung durch kinetische Energiespeicherung bekannt.

Aus der EP 2 525 481B1 ist eine Steuereinrichtung für einen Zwischenkreisumrichter und ein Zwischenkreisumrichter selbst bekannt.

Aus der DE 101 50 347 A1 ist ein schwerer Lüfter für Drehstrommotoren in Anlagen zur Personenbeförderung bekannt.

**Aus der** EP 2 811 633 A2 **ist als nächstliegender Stand der Technik ein System mit zwei Wechselrichtern und einem Gleichrichter bekannt.**

**Aus der** DE 10 2011 003572 A1 **ist ein Pulswechselrichter mit gekühltem Shunt-Widerstand bekannt.**

**Aus der** DE 10 2012 212946 A1 **ist ein Stromerfassungssystem bekannt.**

**Aus der** EP 2 112 014 A1 **ist ein Antriebskraftsystem für ein Fahrzeug bekannt.**

**Aus der** JP 2007 318981 A **ist eine Steuerung für ein elektrisches Fahrzeug bekannt.**

**Aus der** US 2014/198475 A1 **ist eine elektrische Stromschienenverbindung bei einem Umrichter bekannt.**

**Aus der** JP2015 133843 A **ist ein Wechselrichter bekannt, aus welchem wahlweise ein erster oder ein zweiter Elektromotor speisbar ist.**

**Aus der** WO 2016/127 650 A1 **ist ein Konstant-Drehmoment-Regelungsverfahren für elektronisch kommutierte Motoren bekannt.**

**Aus der** JP 2002 051 589 A **ist eine Steuerung für Umrichter eines Antriebsmotors bekannt.**

Der Erfindung liegt daher die Aufgabe zugrunde, ein System weiterzubilden, wobei eine möglichst geringe Leistungsentnahme aus einem Wechselspannungsversorgungsnetz notwendig sein soll.

Erfindungsgemäß wird die Aufgabe bei dem System nach den in Anspruch 1 und bei dem Verfahren nach den in Anspruch 14 angegebenen Merkmalen gelöst.

Von Vorteil **bei dem System** ist, dass die Stromerfassung direkt der Signalelektronik des Wandlers zuführbar ist und somit keine energieaufwendige Umwandlung der Signale erfolgen muss.

Ein weiterer Vorteil liegt darin, dass das System einen aus einem elektrischen Wechselspannungsversorgungsnetz versorgbaren Gleichrichter umfasst, einen ersten Wechselrichter, welcher einen ersten Elektromotor speist, und einen zweiten Wechselrichter, welcher einen zweiten Elektromotor speist,
wobei der gleichspannungsseitige Anschluss des ersten Wechselrichters mit dem gleichspannungsseitigen Anschluss des Gleichrichters verbunden ist,
wobei der gleichspannungsseitige Anschluss des zweiten Wechselrichters mit dem gleichspannungsseitigen Anschluss des Gleichrichters verbunden ist,
insbesondere wobei die beiden gleichspannungsseitigen Anschlüsse der Wechselrichter parallelgeschaltet sind,
wobei eine Reglereinheit, insbesondere im ersten Wechselrichter, vorgesehen ist,

- welche dazu ausgebildet ist, die aus dem Wechselspannungsversorgungsnetz über den Gleichrichter aufgenommene Leistung auf einen Sollwert hin zu regeln, indem sie das Drehmoment des vom ersten Wechselrichter gespeisten Elektromotors als Stellgröße stellt,
- wobei die Reglereinheit einen Vorsteuerpfad aufweist, so dass als Vorsteuersignal die vom zweiten Elektromotor über den zweiten Wechselrichter abgegebene oder aufgenommene Leistung wirksam ist,
- wobei die Reglereinheit weiterhin dazu ausgebildet ist, die Leistung des zweiten Wechselrichters (3, 4) zu bestimmen, indem sie einen Strom I_ZK_App des zweiten Wechselrichters mit einer gemessenen Zwischenkreisspannung U_ZK_ist multipliziert.

Von Vorteil ist dabei, dass möglichst wenig Leistung aus dem Wechselspannungsversorgungsnetz entnommen wird. Somit wird bei immer wieder zwischen generatorischem und motorischem Betrieb wechselndem Betrieb des zweiten Elektromotors der erste Antrieb als Schwungmassenspeicher benutzt und somit weniger Leistung vom Wechselspannungsversorgungsnetz über den Gleichrichter bezogen.

Bei einer vorteilhaften Ausgestaltung bestimmt ein Mittel zur Erfassung des am gleichspannungsseitigen Anschluss des Gleichrichters austretenden Stromes einen Wert I_ZK_N und dieser Wert wird einem Mittel zur Produktbildung zugeführt, welches den Wert mit dem erfassten Wert der am gleichspannungsseitigen Anschluss des Gleichrichters anliegenden Spannung U_ZK_Ist multipliziert. Von Vorteil ist dabei, dass die dem Wechselspannungsversorgungsnetz entnommene Leistung in einfacher Weise bestimmbar ist.

Bei einer vorteilhaften Ausgestaltung weist die Reglereinheit einen linearen Regler auf und den Vorsteuerpfad,
wobei dem linearen Regler als Eingangssignal die Differenz zwischen der erfassten oder bestimmten aus dem Wechselspannungsversorgungsnetz aufgenommenen Leistung, insbesondere über den Gleichrichter aufgenommenen Leistung, und einem Sollwert der vom Wechselspannungsversorgungsnetz bezogenen Leistung zugeführt wird,
wobei dem Ausgangssignal des linearen Reglers das Vorsteuersignal aufsummiert wird und dem so gebildeten Summensignal ein einer Verlustleistung des ersten Elektromotors entsprechendes Signal aufsummiert wird und das so gebildete Signal einem Mittel zur Division zugeführt wird, das als Ausgangssignal das durch ein der Drehzahl des ersten Elektromotors entsprechendes Signal dividiertes Signal zur Verfügung stellt,
wobei das Ausgangssignal als Stellgröße verwendet wird und dem Drehmoment des vom ersten Wechselrichter gespeisten Elektromotors entspricht. Von Vorteil ist dabei, dass mittels der Vorsteuerung ein schnelles Hinregeln erreichbar ist. Außerdem ist durch die Berücksichtigung der Verlustleistung des ersten Motors ebenfalls ein schnelles hinregeln erreichbar. Mittels der Division durch die Winkelgeschwindigkeit, insbesondere Drehzahl, des Motors ist als Stellgröße das Drehmoment in einfacher Weise bestimmbar.

Bei einer vorteilhaften Ausgestaltung ist der lineare Regler ein PI-Regler. Von Vorteil ist dabei, dass eine einfache Ausführung des Reglers vorsehbar ist.

Bei einer vorteilhaften Ausgestaltung wird das der Drehzahl des ersten Elektromotors entsprechende Signal erfasst mittels eines Sensors zur Drehzahl- oder Lageerfassung, welcher am ersten Elektromotor angeordnet ist, oder aus dem erfassten Wert des Motorstroms des ersten Elektromotors und aus dem Wert der erfassten Motorspannung oder der am gleichspannungsseitigen Anschluss des Gleichrichters erfassten Spannung bestimmt wird, insbesondere mittels eines Maschinenmodells. Von Vorteil ist dabei, dass die erfasste Drehzahl verwendbar ist um die Stellgröße möglichst aktuell und genau bestimmbar zu machen.

Bei einer vorteilhaften Ausgestaltung wird die vom zweiten Elektromotor über den zweiten Wechselrichter aufgenommene Leistung aus der am gleichspannungsseitigen Anschluss des Gleichrichters erfassten Spannung und dem vom zweiten Wechselrichter aufgenommenen und erfassten Strom gebildet. Von Vorteil ist dabei, dass die Leistung des zweiten Motors in einfacher Weise bestimmbar ist.

Bei einer vorteilhaften Ausgestaltung wird die vom ersten Elektromotor über den ersten Wechselrichter aufgenommene Leistung aus der am gleichspannungsseitigen Anschluss des Gleichrichters erfassten Spannung und dem vom ersten Wechselrichter aufgenommenen und erfassten Strom gebildet. Von Vorteil ist dabei, dass die Leistung des ersten Motors in einfacher Weise bestimmbar ist.

Von Vorteil **bei dem Verfahren** ist dabei, dass die aus dem Wechselspannungsversorgungsnetz entnommene Leistung in einfacher Weise auf einen möglichst kleinen Wert minimierbar ist.

Bei einer vorteilhaften Ausgestaltung ist der erste Elektromotor als Lüftermotor ausgeführt, wobei der vom Lüftermotor geförderte Kühlluftstrom am zweiten Elektromotor und/oder zweiten Wechselrichter entlang und/oder durch den zweiten Elektromotor hindurchgeführt ist,

insbesondere wobei also ein Lüfter drehfest mit der Rotorwelle des ersten Elektromotors verbunden ist. Von Vorteil ist dabei, dass der Lüfter als Schwungmasse verwendbar ist. Somit ist der Lüftermotor als Schwungmassenspeicher betreibbar.

Bei einer vorteilhaften Ausgestaltung wächst im generatorischen Betrieb des zweiten Elektromotors der Kühlluftstrom an, insbesondere also nimmt er zu. Von Vorteil ist dabei, dass bei generatorischem Betrieb Leistung dem Schwungmassenspeicher zuführbar ist und somit der als Lüftermotor ausgeführte Schwungmassenspeicher mehr Energie aufnimmt. Aufgrund der höheren Drehzahl wird somit ein stärkerer Luftstrom erzeugt, und somit der zweite Wechselrichter und/oder der zweite Elektromotor stärker gekühlt.

Bei einer vorteilhaften Ausgestaltung bestimmt ein Mittel zur Differenzbildung den Sollwert (I_ZK_SMS_Soll), indem es die Differenz bildet aus einem konstanten Wert (Const) und dem erfassten Wert (I_ZK_App) des vom zweiten Wechselrichter an dessen gleichstromseitigen Anschluss aufgenommenen Stromes. Von Vorteil ist dabei, dass der konstante Wert der Stromentnahme aus dem Wechselspannungsversorgungsnetz entspricht. Somit wird der überschüssige Strom vom Schwungmassenspeicher entnommen oder an ihn abgeführt.

Bei einer vorteilhaften Ausgestaltung ist der konstante Wert (Const) möglichst klein, insbesondere im über einen langen Zeitraum gemittelten Bereich. Von Vorteil ist dabei, dass eine möglichst langandauernde minimale Stromentnahme aus dem Wechselspannungsversorgungsnetz erreichbar ist. Die Dauer des Zeitraums hängt von den Energiekapazitätsgrenzen des Schwungmassenspeichers ab. Beispielsweise ist eine weitere Energieentnahme bei entladenem Energiespeicher, also Schwungmassenspeicher, nicht ausführbar. Ebenso ist bei maximal zulässiger Aufladung eine weitere Leistungszufuhr an den Energiespeicher nicht mehr erlaubt.

Bei einer vorteilhaften Ausgestaltung umgibt das Gehäuse des ersten Wechselrichters auch den zweiten Wechselrichter gehäusebildend. Von Vorteil ist dabei, dass eine möglichst kompakte Ausführung erreichbar ist. Außerdem ist beispielsweise eine einzige Signalelektronik ausreichend für beide Wechselrichter.

Bei einer vorteilhaften Ausgestaltung erzeugt eine Signalelektronik die Ansteuersignale für die in Halbbrücken angeordneten Leistungshalbleiterschalter des ersten Wechselrichters und die Ansteuersignale erzeugt für die in Halbbrücken angeordneten Leistungshalbleiterschalter des zweiten Wechselrichters. Von Vorteil ist dabei, dass ein Datenbus entfällt und somit eine einzige Signalelektronik die Ansteuersignale beider Wechselrichter erzeugt.

Bei einer alternativen vorteilhaften Ausgestaltung ist eine Signalelektronik des ersten Wechselrichters mittels eines Datenbus mit der Signalelektronik des zweiten Wechselrichters zum Datenaustausch verbunden. Von Vorteil ist dabei, dass mittels des Datenbusses die beiden Signalelektroniken der beiden Wechselrichter synchronisiert betreibbar sind. Die beiden Wechselrichter sind dabei in separaten Gehäusen anordenbar.

Bei einer vorteilhaften Ausgestaltung bestimmt ein Mittel zur Differenzbildung einen Reglereingangswert, indem es die Differenz bildet aus einem konstanten Wert (I_ZK_N_soll) und dem vom ersten Wechselrichter erfassten Wert (I_ZK_N) des gesamten vom Gleichrichter in den Zwischenkreis gelieferten Stroms. Der Regler der diese Differenz ausregelt hat als Stellgröße das Solldrehmoment des ersten Motors. Von Vorteil ist dabei, dass der konstante Wert der Stromentnahme aus dem Wechselspannungsversorgungsnetz entspricht und somit der überschüssige Strom vom Schwungmassenspeicher entnommen oder an ihn abgeführt wird.

Bei einer vorteilhaften Ausgestaltung ist der konstante Wert (I_ZK_N_soll) möglichst klein, insbesondere im über einen langen Zeitraum gemittelten Bereich. Von Vorteil ist dabei, dass eine möglichst langandauernde minimale Stromentnahme aus dem Wechselspannungsversorgungsnetz erreichbar ist. Die Dauer des Zeitraums hängt von den Energiekapazitätsgrenzen des Schwungmassenspeichers ab. Beispielsweise ist eine weitere Energieentnahme bei entladenem Energiespeicher, also Schwungmassenspeicher, nicht ausführbar. Ebenso ist bei maximal zulässiger Aufladung eine weitere Leistungszufuhr an den Energiespeicher nicht mehr erlaubt. Im Regelfall wird die minimale Stromaufnahme und damit eine minimale Leistungsaufnahme aus dem Netz dauerhaft erreicht.

Bei einer alternativen vorteilhaften Ausgestaltung ist ein weiteres Messmittel vorgesehen welches den Strom des zweiten Wechselrichters erfasst (I_ZK_App). Von Vorteil ist dabei, dass mittels des erfassten Stroms des zweiten Wechselrichters die für die Vorsteuerung nötige Leistung des zweiten Wechselrichters auf einfache Weise bestimmbar ist in dem der Strom des zweiten Wechselrichters mit der gemessenen Zwischenkreisspannung U_ZK_ist multipliziert wird. Bei mehr als einem Applikationswechselrichter entspricht I_ZK_App dem Summenstrom aller Applikationswechselrichter.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten im Rahmen der beigefügten Patentansprüche.

Die Erfindung wird nun anhand von Abbildungen näher erläutert:
In der Figur 1 ist ein erfindungsgemäßes System dargestellt.
In der Figur 2 ist ein dort angewandtes Regelverfahren schematisch dargestellt.
In der Figur 3 ist ein weiteres Regelverfahren schematisch dargestellt.

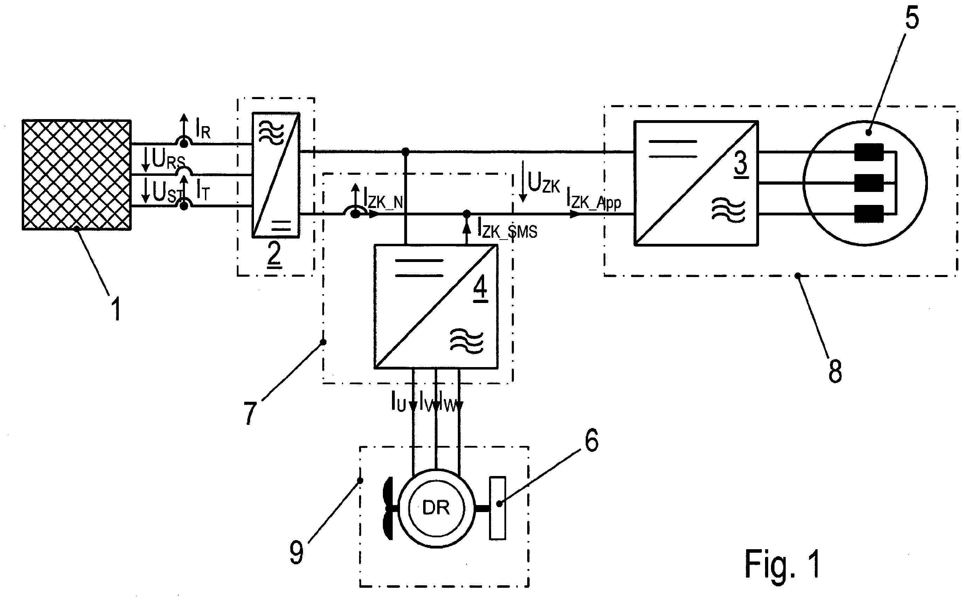

Wie in Figur 1 dargestellt, ist aus einem Wechselspannungsversorgungsnetz 1 ein Gleichrichter 2 versorgt, an dessen gleichspannungsseitigem Ausgang zwei parallel geschaltete Wechselrichter (3, 4) angeschlossen sind.

Dabei weist der gleichspannungsseitige Ausgang des Gleichrichters 2, also der Zwischenkreis, die Spannung U_ZK auf. Der am gleichspannungsseitigen Anschluss des Gleichrichters 2 austretende beziehungsweise eintretende Strom I_ZK_N wird erfasst. Der vom zweiten Wechselrichter 3 entnommene Strom ist mit I_ZK_App bezeichnet; entsprechend wird der vom ersten Wechselrichter 4 entnommene Strom mit I_ZK_SMS bezeichnet.

Das Mittel zur Stromerfassung, also zur Erfassung des Stromes I_ZK_N, ist innerhalb des Gehäuses des ersten Wechselrichters 4 angeordnet. Somit sind die erfassten Stromwerte ohne lange Leitungen, also direkt, an die Signalelektronik des ersten Wechselrichters herangeführt.

Alternativ ist der Strom I_ZK_N auch aus den am wechselspannungsseitigen Anschluss des Gleichrichters 2 erfassten Strömen, insbesondere Phasenströmen (I_{R}, I_{S}, I_{T}) des Wechselspannungsversorgungsnetzes, bestimmbar. Hierzu werden zumindest zwei erfasste Phasenstromwerte (I_{R}, I_{T}) benötigt. Die Mittel zur Phasenstromerfassung, also zur Erfassung der Phasenströme (I_{R}, I_{S}, I_{T}), sind innerhalb des Gehäuses des ersten Wechselrichters 4 angeordnet. Somit sind die erfassten Stromwerte ohne lange Leitungen, also direkt, an die Signalelektronik des ersten Wechselrichters herangeführt.

Wie in Figur 1 dargestellt, speist, der zweite Wechselrichter 3 einen mit dem wechselspannungsseitigen Ausgang des zweiten Wechselrichters 3 verbundenen Drehstrommotor 5. Dabei weist der zweite Wechselrichter 3 eine aus drei Halbbrücken aufgebaute Leistungsendstufe auf, wobei in jedem oberen und in jedem unteren Zweig jeder Halbbrücke jeweils ein Leistungshalbleiterschalter, insbesondere IGBT oder MOSFET, angeordnet ist. Die Leistungshalbleiterschalter dieser Leistungsendstufe des Wechselrichters 3 werden jeweils mittels pulsweitenmodulierter Signale angesteuert, welche von einer Signalelektronik des zweiten Wechselrichters 3 erzeugt werden. Dabei werden die Signale von der Signalelektronik des zweiten Wechselrichters 3 derart erzeugt, dass durch die vom zweiten Wechselrichter 3 gestellte Motorspannung der Motorstrom auf einen vorgegebenen Sollwert hin geregelt wird. Dem Sollwert des Motorstroms entspricht dabei ein Sollwert für Drehmoment. Alternativ kann auch auf einen Geschwindigkeitssollwert hin geregelt werden.

Die Zwischenkreisspannung U_ZK liegt auch am gleichspannungsseitigen Anschluss des ersten Wechselrichters 4 an, welcher einen Elektromotor eines Schwungmassenspeichers versorgt. Dabei ist der Elektromotor vorzugsweise als Drehstrommotor ausgeführt, dessen Motorphasenströme als I_U, I_V und I_W bezeichnet werden. Der Drehstrommotor ist vorzugsweise als Asynchronmotor ausgeführt. Die Schwungmasse ist vorzugsweise als mit dem Rotor des Elektromotors drehfest verbundener Lüfter ausgeführt, so dass der Lüftermotor als Schwungmassenspeicher fungiert.

Der Elektromotor weist also eine Rotorwelle auf, die drehfest mit der vorzugsweise als Lüfter ausgeführten, drehbar gelagerten Schwungmasse 6 verbunden ist, so dass im motorischen Betrieb Energie in den Schwungmassenspeicher vom Elektromotor aus einspeicherbar ist und im generatorischen Betrieb entnehmbar ist.

Der erste Wechselrichter 4 speist also einen mit dem wechselspannungsseitigen Ausgang des ersten Wechselrichters 4 verbundenen Drehstrommotor. Dabei weist der erste Wechselrichter 4 ebenfalls eine aus drei Halbbrücken aufgebaute Leistungsendstufe auf, wobei in jedem oberen und in jedem unteren Zweig jeder Halbbrücke jeweils ein Leistungshalbleiterschalter, insbesondere IGBT oder MOSFET, angeordnet ist. Die Leistungshalbleiterschalter dieser Leistungsendstufe des ersten Wechselrichters 4 werden jeweils mittels pulsweitenmodulierter Signale angesteuert, welche von einer Signalelektronik des ersten Wechselrichters 4 erzeugt werden. Dabei werden die Signale von der Signalelektronik des ersten Wechselrichters 4 derart erzeugt, dass durch die vom ersten Wechselrichter 4 gestellte Motorspannung der Motorstrom auf einen vorgegebenen Sollwert hin geregelt wird. Dem Sollwert des Motorstroms entspricht dabei ein Sollwert für Drehmoment. Alternativ kann auch auf einen Geschwindigkeitssollwerteverlauf hin geregelt werden.

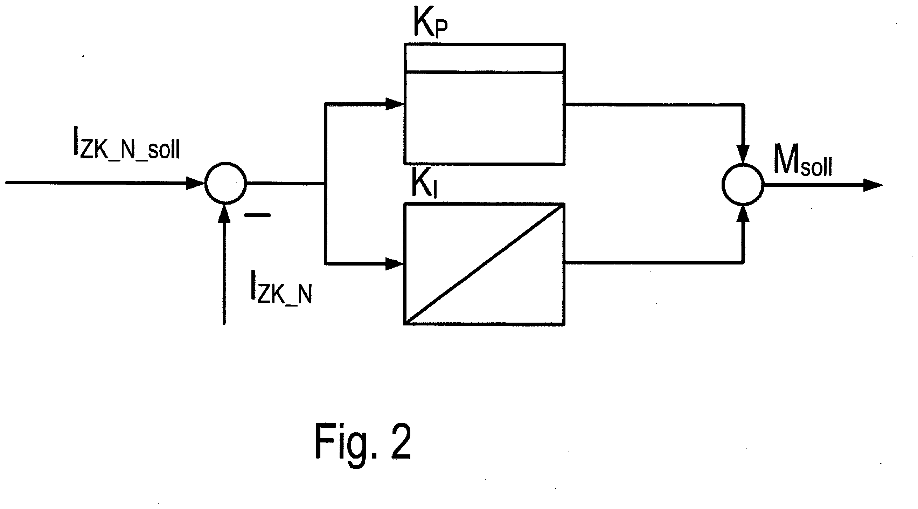

Erfindungsgemäß wird das in Figur 2 dargestellte Regelverfahren angewandt:
Hierbei wird der am gleichspannungsseitigen Anschluss des Gleichrichters 2 austretende Strom I_ZK_N erfasst und auf einen Sollwert I_ZK_N_Soll hin geregelt, indem das Drehmoment des Motors DR des Schwungmassenspeichers 9 gestellt wird.

Alternativ wird statt der Erfassung des Stromes I_ZK_N der am gleichspannungsseitigen Anschluss des ersten Wechselrichters ein- beziehungsweise austretende Strom I_ZK_SMS erfasst und der am gleichspannugnsseitigen Anschluss des zweiten Wechselrichters einbeziehungsweise austretende Strom I_ZK_App erfasst wird. Aus diesen beiden erfassten Werten ist dann durch Summenbildung der Strom I_ZK_N in einfacher Weise bestimmbar.

Durch die in Figur 2 schematisch gezeigte Regelung überschreitet der vom Gleichrichter 2, also vom Wechselspannungsversorgungsnetz, gelieferte Strom einen konstanten Wert const nicht oder zumindest nicht dauerhaft. Denn der vom Schwungmassenspeicher 9 aufgenommene beziehungsweise gelieferte Strom I_ZK_SMS wird entsprechend indirekt geregelt.

Wie in Figur 2 gezeigt, wird die Differenz des Sollwertes I_ZK_N_Soll und des Istwertes I_ZK_N_Ist dem Regler zugeführt. Dabei ist der Regler als linearer Regler, insbesondere PI-Regler, ausgeführt, dessen Stellgröße der Sollwert des Drehmoments M_Soll des vom Wechselrichter 4 gespeisten Elektromotors DR des Schwungmassenspeichers 9 ist. Somit wird der Elektromotor DR des Schwungmassenspeichers 9 derart beschleunigt oder abgebremst, dass die Summe seines eigenen Belastungswerts und des übermittelten Belastungswerts des zweiten Antriebs 8, insbesondere des Elektromotors 5, einen konstanten Wert, insbesondere möglichst kleinen Wert, aufweist oder zumindest darauf hin geregelt wird.

Somit ist die vom Elektromotor 5 über den Wechselrichter 3 bewirkte Stromentnahme aus dem Gleichrichter 2 begrenzbar, indem ein entsprechender Stromanteil vom Schwungmassenspeicher 9 geliefert wird.

Wie in Figur 1 ersichtlich, ist auf dem mit der Schwungmasse 6 drehfest verbundenen Rotor ein Lüfter angeordnet, insbesondere also mit dem Rotor ebenfalls drehfest verbunden. Auf diese Weise ist der vom Lüfter geförderte Luftstrom zur Kühlung des Antriebs 8, insbesondere des Motors 5 und/oder des ihn speisenden Wechselrichters 3, verwendet.

Alternativ ist die Schwungmasse 6 durch entsprechend massereiche Ausführung des Lüfters realisierbar. Somit ist also ein von einem Motor angetriebener Lüfter als Schwungmassenspeicher betreibbar. Die in Figur 2 dargestellte Regelung bei einem solchen Lüftermotor anzuwenden, ist auch dann ausführbar, wenn die maximale Leistung des Antriebs 8 kleiner ist als die maximale vom Lüftermotor aufnehmbare oder abgebbare Leistung.

Alternativ ist die Netzleistung bestimmbar entweder näherungsweise durch Multiplikation von I_ZK_N mit der Zwischenkreisspannung U_ZK oder direkt durch Messung der drei Phasenströme und der drei Phasenspannungen. Aufgrund von Wissen über die Beschaffenheit des speisenden Netzes (Symmetrie, Effektivwert der Spannung) können auch weniger als die genannten sechs Phasengrößen für die Bestimmung der Netzleistung ausreichen. Ist die Netzleistung bekannt kann diese auf ein Minimum geregelt werden.

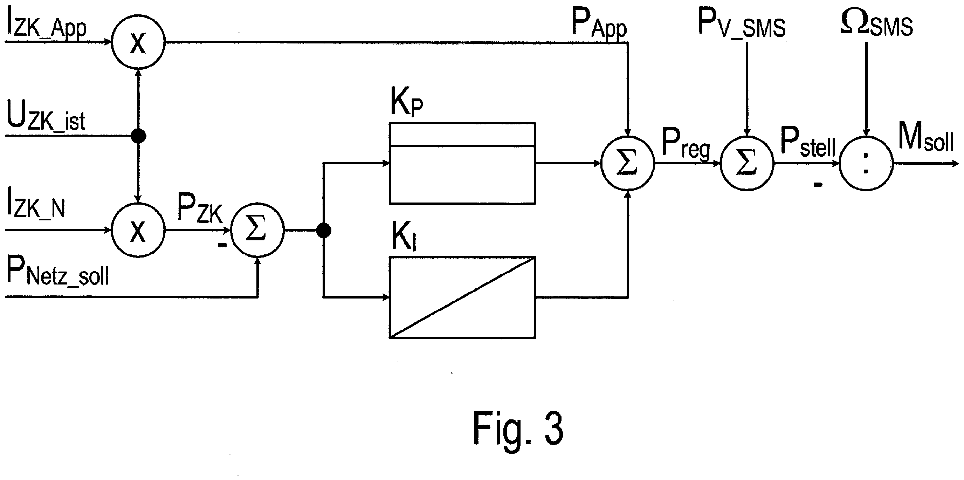

Wie in Figur 3 gezeigt, wird der Istwert der vom Wechselspannungsversorgungsnetz über den Gleichrichter 2 in den Zwischenkreis eingebrachten Leistung P_ZK bestimmt, indem das Produkt aus dem mit einem entsprechenden Spannungserfassungsmittel erfassten Istwert U_ZK_Ist der Zwischenkreisspannung und dem erfassten oder aus I_ZK_App und I_ZK_SMS bestimmten Istwert des StromesI_ZK_N. Alternativ ist die Netzleistung bestimmbar entweder näherungsweise durch Multiplikation von I_ZK_N mit der Zwischenkreisspannung U_ZK oder direkt durch Messung der drei Phasenströme und der drei Phasenspannungen. Aufgrund von Wissen über die Beschaffenheit des speisenden Netzes (Symmetrie, Effektivwert der Spannung) können auch weniger als die genannten sechs Phasengrößen für die Bestimmung der Netzleistung ausreichen. Ist die Netzleistung bekannt kann diese auf ein Minimum geregelt werden.

Diese Leistung P_ZK wird auf einen Sollwert P_ZK_Soll hingeregelt, indem die Differenz zwischen P_ZK und P_ZK_Soll einem Regler zugeführt wird, insbesondere einem linearen Regler, wobei der Regler einen Stellwert erzeugt, dem die vom zweiten Wechselrichter 3, insbesondere also auch vom zweiten Motor 5, aufgenommene Leistung P_App als Vorsteuerwert aufsummiert wird, wobei das Ergebnis dieser Summenbildung als P_reg bezeichnet wird.

Dabei wird P_App als Produkt des erfassten Istwerts U_ZK_ist und aus dem Istwert des vom zweiten Wechselrichter an seinem gleichstromseitigen Anschluss aufgenommenen Strom I_ZK_App bestimmt.

Dem bestimmten Wert P_reg wird außerdem ein Wert P_V_SMS aufsummiert, so dass ein Stellwert P_Stell bestimmt wird, in welchem die Verlustleistung P_V_SMS des Schwungmassenspeichers berücksichtigt ist.

Mittels Division des Stellwertes P_Stell durch die Drehzahl Ω_SMS, insbesondere also Winkelgeschwindigkeit, des Rotors des Elektromotors des Schwungmassenspeichers ist daraus der Stellwert M_Soll, also das gewünschte Drehmoment des Elektromotors DR des Schwungmassenspeichers bestimmbar.

Wichtig ist also, dass die Leistung des Antriebs des Schwungmassenspeichers von einem linearen Regler auf einen Sollwert hin geregelt wird, indem das Drehmoment des Antriebs des Schwungmassenspeichers entsprechend gestellt wird, wobei als Vorsteuerwert die vom zweiten Wechselrichter aufgenommene Leistung verwendet wird.

Im generatorischen Betrieb wird der Drehstrommotor 5 vom als Lüfter fungierenden Schwungmassenspeicher 9 stärker oder besonders stark gekühlt, weil Leistung an den Schwungmassenspeicher 9 abgeführt wird und somit dessen Drehzahl steigt.

Wenn im Gehäuse des ersten Wechselrichters 4 das Mittel zur Erfassung des am wechselspannungsseitigen Anschluss des Gleichrichters eintretenden Stromes angeordnet ist, insbesondere also die Mittel zur Erfassung der Phasenströme, angeordnet sind, ist am Gehäuse des ersten Wechselrichters eine Zuführung des netzseitigen Drehstroms ermöglicht, die dem Mittel zur Erfassung des Stromes zugeführt wird und von dort herausgeführt wird zum Gehäuse des Gleichrichters hin. Außerdem ist der gleichspannungsseitige Anschluss des Gleichrichters 2 mit einem entsprechenden gleichspannungsseitigen Anschluss, also Zwischenkreisanschluss, des ersten Wechselrichters 4 verbunden. Darüber hinaus ist am wechselspannungsseitigen Anschluss des ersten Wechselrichters 4 der erste Motor elektrisch angeschlossen, insbesondere mittels eines Drehstromkabels.

Die Signalelektronik des zweiten Wechselrichters 3 ist bei einem anderen Ausführungsbeispiel mit der Signalelektronik des ersten Wechselrichters 4 zum Datenaustausch mittels Feldbus verbunden.

### Bezugszeichenliste

1 Wechselspannungsversorgungsnetz
2 Gleichrichter
3 Wechselrichter des zweiten Antriebs 8
4 Wechselrichter des ersten Antriebs 7
5 Drehstrommotor
6 Schwungmasse
7 erster Umrichter, insbesondere Wechselrichter
8 erster Antrieb
9 Schwungmassenspeicher
CPU Signalelektronik mit Rechnereinheit
DR Drehstrommotor, insbesondere Asynchronmotor
U_ZK Zwischenkreisspannung
U_ZK_Ist erfasster Istwert der Zwischenkreisspannung
P_Netz_Soll Sollwert der vom Wechselspannungsversorgungsnetz bezogenen Leistung
P_ZK vom Wechselspannungsversorgungsnetz bezogene Leistung
P_App Leistung des zweiten Antriebs
P_reg idealisierter Stellwert der Leistung
P_V_SMS Verlustleistung des Schwungmassenspeichers, insbesondere drehzahlabhängige Verlustleistung
P_Stell Stellwert der Leistung des ersten Antriebs
Ω_SMS Drehzahl des Rotors des Elektromotors des Schwungmassenspeichers
I_ZK_N vom Gleichrichter 2 in den Zwischenkreis übertragender Strom
I_ZK_N_Soll Sollwert für den Strom I_ZK_N
I_ZK_App Istwert des Eingangsstroms des Wechselrichters 3
I_ZK_SMS Istwert des Eingangsstroms des Wechselrichters 4
I_ZK_SMS_Soll Sollwert des Eingangsstroms des Wechselrichters 4
I_U erster Phasenstrom des Motors DR
I_V zweiter Phasenstrom des Motors DR
I_W dritter Phasenstrom des Motors DR
M_Soll Drehmomentsollwert
Const Sollwertstrom, insbesondere vom Gleichrichter 2 in den Zwischenkreis aufgenommener Sollwertstrom
K_P Proportionalitätsanteil
K_I Integralanteil

## Patentansprüche

1. System, umfassend einen aus einem elektrischen Wechselspannungsversorgungsnetz (1) versorgbaren Gleichrichter (2), einen ersten Wechselrichter, welcher einen ersten Elektromotor speist, und einen zweiten Wechselrichter, welcher einen zweiten Elektromotor speist,
**wobei** der gleichspannungsseitige Anschluss des ersten Wechselrichters (3, 4) mit dem gleichspannungsseitigen Anschluss des Gleichrichters (2) verbunden ist,
wobei der gleichspannungsseitige Anschluss des zweiten Wechselrichters (3, 4) mit dem gleichspannungsseitigen Anschluss des Gleichrichters (2) verbunden ist,
insbesondere wobei die beiden gleichspannungsseitigen Anschlüsse der Wechselrichter (3, 4) parallelgeschaltet sind,
**dadurch gekennzeichnet, dass**
eine Reglereinheit, insbesondere im ersten Wechselrichter, vorgesehen ist,
welche dazu ausgebildet ist, die aus dem Wechselspannungsversorgungsnetz (1) über den Gleichrichter (2) aufgenommene Leistung auf einen Sollwert hin zu regeln, indem sie das Drehmoment des vom ersten Wechselrichter (3, 4) gespeisten Elektromotors **als Stellgröße** (M_Soll) stellt,
wobei die Reglereinheit einen Vorsteuerpfad aufweist, so dass als Vorsteuersignal die vom zweiten Elektromotor über den zweiten Wechselrichter (3, 4) abgegebene oder aufgenommene Leistung wirksam ist,
wobei die Reglereinheit weiterhin dazu ausgebildet ist, die Leistung des zweiten Wechselrichters (3, 4) zu bestimmen, indem sie einen Strom I_ZK_App des zweiten Wechselrichters (3, 4) mit einer gemessenen Zwischenkreisspannung U_ZK_ist multipliziert.

2. **System nach Anspruch 1**, wobei innerhalb des Gehäuses des ersten Wechselrichters (3, 4) ein Mittel zur Stromerfassung angeordnet ist,
**dadurch gekennzeichnet,**
**dass entweder**
- das Mittel zur Stromerfassung ein Mittel zur Erfassung des am gleichspannungsseitigen Anschluss des Gleichrichters (2) aus dem Gleichrichter (2) austretenden Stromes ist
**oder dass**
- das Mittel zur Stromerfassung ein Mittel zur Erfassung der am wechselspannungsseitigen Anschluss des Gleichrichters (2) aus dem elektrischen Wechselspannungsversorgungsnetz (1) eintretenden Ströme ist,
wobei am Gehäuse des ersten Wechselrichters (3, 4) eine Zuführung des netzseitigen Drehstroms ermöglicht ist, die dem Mittel zur Erfassung des Stromes zugeführt wird und vom Gehäuse des ersten Wechselrichters (3, 4) herausgeführt wird zum Gehäuse des Gleichrichters (2) hin.

3. System nach mindestens einem der vorangegangenen Ansprüche,
**dadurch gekennzeichnet, dass**
ein Mittel zur Erfassung des am gleichspannungsseitigen Anschluss des Gleichrichters (2) austretenden Stromes dazu ausgebildet ist, einen Wert I_ZK_N zu bestimmen und den Wert einem Mittel zur Produktbildung zuzuführen, welches dazu ausgebildet ist, den Wert mit dem erfassten Wert der am gleichspannungsseitigen Anschluss des Gleichrichters (2) anliegenden Spannung zu multiplizieren.

4. System nach mindestens einem der vorangegangenen Ansprüche,
**dadurch gekennzeichnet, dass**
der Sollwert möglichst klein ist, insbesondere im über einen langen Zeitraum gemittelten Bereich.

5. System nach mindestens einem der vorangegangenen Ansprüche,
**dadurch gekennzeichnet, dass**
der Gleichrichter (2) baulicher Teil des ersten Wechselrichters (3, 4) ist, insbesondere der Gleichrichter (2) vom Gehäuse des ersten Wechselrichters (3, 4) gehäusebildend umfasst oder umgeben ist.

6. System nach mindestens einem der vorangegangenen Ansprüche,
**dadurch gekennzeichnet, dass**
die Reglereinheit einen linearen Regler aufweist und den Vorsteuerpfad,
wobei dem linearen Regler als Eingangssignal die Differenz zwischen der erfassten oder bestimmten aus dem Wechselspannungsversorgungsnetz (1) aufgenommenen Leistung, insbesondere über den Gleichrichter (2) aufgenommenen Leistung, und einem Sollwert der vom Wechselspannungsversorgungsnetz (1) bezogenen Leistung zugeführt wird,
wobei dem Ausgangssignal des linearen Reglers das Vorsteuersignal aufsummiert wird und dem so gebildeten Summensignal ein einer Verlustleistung des ersten Elektromotors entsprechendes Signal aufsummiert wird und das so gebildete Signal einem Mittel zur Division zugeführt wird, das als Ausgangssignal das durch ein der Drehzahl des ersten Elektromotors entsprechendes Signal dividiertes so gebildete Signal zur Verfügung stellt,
wobei das Ausgangssignal als Stellgröße verwendet wird und dem Drehmoment des vom ersten Wechselrichter (3, 4) gespeisten Elektromotors entspricht.

7. System nach mindestens einem der vorangegangenen Ansprüche,
**dadurch gekennzeichnet, dass**
der lineare Regler ein PI-Regler ist.

8. System nach mindestens einem der vorangegangenen Ansprüche,
**dadurch gekennzeichnet, dass**
das der Drehzahl des ersten Elektromotors entsprechende Signal erfasst wird mittels eines Sensors zur Drehzahl- und/oder Lageerfassung, welcher am ersten Elektromotor angeordnet ist, oder aus dem erfassten Wert des Motorstroms des ersten Elektromotors und aus dem Wert der erfassten Motorspannung oder der am gleichspannungsseitigen Anschluss des Gleichrichters (2) erfassten Spannung bestimmt wird, insbesondere mittels eines Maschinenmodells.

9. System nach mindestens einem der vorangegangenen Ansprüche,
**dadurch gekennzeichnet, dass**
die vom zweiten Elektromotor über den zweiten Wechselrichter (3, 4) aufgenommene Leistung aus der am gleichspannungsseitigen Anschluss des Gleichrichters (2) erfassten Spannung und dem vom zweiten Wechselrichter (3, 4) aufgenommenen und erfassten Strom gebildet wird.

10. System nach mindestens einem der vorangegangenen Ansprüche,
**dadurch gekennzeichnet, dass**
die vom ersten Elektromotor über den ersten Wechselrichter (3, 4) aufgenommene Leistung aus der am gleichspannungsseitigen Anschluss des Gleichrichters (2) erfassten Spannung und dem vom ersten Wechselrichter (3, 4) aufgenommenen und erfassten Strom gebildet wird.

11. System nach mindestens einem der vorangegangenen Ansprüche,
**dadurch gekennzeichnet, dass**
der erste Elektromotor als Lüftermotor ausgeführt ist, wobei der vom Lüftermotor geförderte Kühlluftstrom am zweiten Elektromotor und/oder zweiten Wechselrichter (3, 4) entlang und/oder durch den zweiten Elektromotor hindurchgeführt ist,
insbesondere wobei also ein Lüfter drehfest mit der Rotorwelle des ersten Elektromotors verbunden ist.

12. System nach mindestens einem der vorangegangenen Ansprüche,
**dadurch gekennzeichnet, dass**
im generatorischen Betrieb des zweiten Elektromotors der Kühlluftstrom anwächst, insbesondere also zunimmt.

13. System nach mindestens einem der vorangegangenen Ansprüche,
**dadurch gekennzeichnet, dass**
eine Signalelektronik dazu ausgebildet ist, die Ansteuersignale für die in Halbbrücken angeordneten Leistungshalbleiterschalter des ersten Wechselrichters (3, 4) zu erzeugen und die Ansteuersignale für die in Halbbrücken angeordneten Leistungshalbleiterschalter des zweiten Wechselrichters (3, 4) zu erzeugen, oder dass eine Signalelektronik des ersten Wechselrichters (3, 4) mittels eines Datenbus mit der Signalelektronik des zweiten Wechselrichters (3, 4) zum Datenaustausch verbunden ist.

14. Verfahren zum Betreiben eines Systems, umfassend einen aus einem elektrischen Wechselspannungsversorgungsnetz (1) versorgbaren Gleichrichter (2), einen ersten Wechselrichter (3, 4), welcher einen ersten Elektromotor speist, und einen zweiten Wechselrichter (3, 4), welcher einen zweiten Elektromotor speist,
wobei das System nach mindestens einem der vorangegangenen Ansprüche ausgeführt ist,
**dadurch gekennzeichnet, dass**
der gleichspannungsseitige Anschluss des ersten Wechselrichters (3, 4) mit dem gleichspannungsseitigen Anschluss des Gleichrichters (2) verbunden ist,
wobei der gleichspannungsseitige Anschluss des zweiten Wechselrichters (3, 4) mit dem gleichspannungsseitigen Anschluss des Gleichrichters (2) verbunden ist,
insbesondere wobei die beiden gleichspannungsseitigen Anschlüsse der Wechselrichter (3, 4) parallelgeschaltet sind,
insbesondere wobei eine Reglereinheit, insbesondere im ersten Wechselrichter (3, 4), vorgesehen ist,
wobei die aus dem Wechselspannungsversorgungsnetz (1) insbesondere über den Gleichrichter (2) aufgenommene Leistung auf einen Sollwert hin geregelt wird, indem das Drehmoment des vom ersten Wechselrichter (3, 4) gespeisten Elektromotors als Stellgröße (M_Soll) gestellt wird
wobei als Vorsteuersignal die vom zweiten Elektromotor über den zweiten Wechselrichter (3, 4) abgegebene oder aufgenommene Leistung wirksam ist,
wobei die Leistung des zweiten Wechselrichters (3, 4) bestimmt wird, indem ein Strom I_ZK_App des zweiten Wechselrichters (3, 4) mit einer gemessenen Zwischenkreisspannung U_ZK_ist multipliziert wird.

## Claims

1. A system, comprising a rectifier (2) which can be supplied from an electrical alternating-voltage supply network (1), a first inverter which feeds a first electric motor, and a second inverter which feeds a second electric motor,
wherein the direct-voltage-side connection of the first inverter (3, 4) is connected to the direct-voltage-side connection of the rectifier (2),
wherein the direct-voltage-side connection of the second inverter (3, 4) is connected to the direct-voltage-side connection of the rectifier (2),
in particular wherein the two direct-voltage-side connections of the inverters (3, 4) are connected in parallel,
**characterised in that**
a controller unit, in particular in the first inverter, is provided,
which unit is designed to control the power received from the alternating-voltage supply network (1) by way of the rectifier (2) to a desired value by setting the torque of the electric motor fed by the first inverter (3, 4) as a controlled variable (M_Soll),
the controller unit having a precontrol path so that the power emitted or received by the second electric motor by way of the second inverter (3, 4) is effective as a precontrol signal,
wherein the controller unit furthermore is designed to determine the power of the second inverter (3, 4) by multiplying a current I_ZK_App of the second inverter (3, 4) by a measured DC-link voltage U_ZK_ist.

2. A system according to claim 1,
wherein a means for current acquisition is arranged within the housing of the first inverter (3, 4),
**characterised in that**
either
- the means for current acquisition is a means for acquiring the current emerging from the rectifier (2) at the direct-voltage-side connection of the rectifier (2) or **in that**
- the means for current acquisition is a means for acquiring the currents entering at the alternating-current-side connection of the rectifier (2) from the electrical alternating-voltage supply network (1),
wherein a supply of the line-side three-phase current is made possible on the housing of the first inverter (3, 4), which is supplied to the means for acquiring the current and from the housing of the first inverter (3, 4) is routed out towards the housing of the rectifier (2).

3. A system according to at least one of the preceding claims,
**characterised in that**
a means for acquiring the current emerging at the direct-voltage-side connection of the rectifier (2) is designed to determine a value I_ZK_N and to supply the value to a means for product formation which is designed to multiply the value by the acquired value of the voltage applied at the direct-voltage-side connection of the rectifier (2).

4. A system according to at least one of the preceding claims,
**characterised in that**
the desired value is as small as possible, in particular in the range averaged over a long period.

5. A system according to at least one of the preceding claims,
**characterised in that**
the rectifier (2) is a structural part of the first inverter (3, 4), in particular the rectifier (2) is encompassed or surrounded by the housing of the first inverter (3, 4) in a housing-forming manner.

6. A system according to at least one of the preceding claims,
**characterised in that**
the controller unit has a linear controller and the precontrol path,
the difference between the acquired or determined power received from the alternating-voltage supply network (1), in particular power received by way of the rectifier (2), and a desired value of the power taken from the alternating-voltage supply network (1) being supplied to the linear controller as an input signal,
the precontrol signal being added to the output signal of the linear controller and a signal corresponding to a power loss of the first electric motor being added to the aggregate signal thus formed, and the signal thus formed being supplied to a means for division which makes available the signal thus formed divided by a signal corresponding to the speed of the first electric motor as output signal,
the output signal being used as a controlled variable and corresponding to the torque of the electric motor fed by the first inverter (3,4).

7. A system according to at least one of the preceding claims,
**characterised in that**
the linear controller is a PI controller.

8. A system according to at least one of the preceding claims,
**characterised in that**
the signal corresponding to the speed of the first electric motor is acquired by means of a sensor for speed and/or position acquisition which is arranged on the first electric motor, or is determined from the acquired value of the motor current of the first electric motor and from the value of the acquired motor voltage or the voltage acquired at the direct-voltage-side connection of the rectifier (2), in particular by means of a machine model.

9. A system according to at least one of the preceding claims,
**characterised in that**
the power received from the second electric motor by way of the second inverter (3, 4) is formed from the voltage acquired at the direct-voltage-side connection of the rectifier (2) and the current received and acquired by the second inverter (3, 4).

10. A system according to at least one of the preceding claims,
**characterised in that**
the power received by the first electric motor by way of the first inverter (3, 4) is formed from the voltage acquired at the direct-voltage-side connection of the rectifier (2) and the current received and acquired by the first inverter (3, 4).

11. A system according to at least one of the preceding claims,
**characterised in that**
the first electric motor is embodied as a fan motor, with the cooling-air flow delivered by the fan motor being conducted along the second electric motor and/or second inverter (3, 4) and/or through the second electric motor,
in particular with a fan therefore being connected non-rotatably to the rotor shaft of the first electric motor.

12. A system according to at least one of the preceding claims,
**characterised in that**
in generator operation of the second electric motor the cooling-air flow increases, in particular therefore becomes larger.

13. A system according to at least one of the preceding claims,
**characterised in that**
signal electronics are designed
to generate the control signals for the power semiconductor switches of the first inverter (3, 4) which are arranged in half-bridges and to generate the control signals for the power semiconductor switches of the second inverter (3, 4) which are arranged in half-bridges,
or **in that** signal electronics of the first inverter (3, 4) are connected for data exchange to the signal electronics of the second inverter (3, 4) by means of a data bus.

14. A method for operating a system, comprising a rectifier (2) which can be supplied from an electrical alternating-voltage supply network (1), a first inverter (3, 4) which feeds a first electric motor, and a second inverter (3, 4) which feeds a second electric motor,
wherein the system is embodied according to at least one of the preceding claims,
**characterised in that**
the direct-voltage-side connection of the first inverter (3, 4) is connected to the direct-voltage-side connection of the rectifier (2),
the direct-voltage-side connection of the second inverter (3, 4) being connected to the direct-voltage-side connection of the rectifier (2),
in particular with the two direct-voltage-side connections of the inverters (3, 4) being connected in parallel,
in particular with a controller unit, in particular in the first inverter (3, 4), being provided,
the power received from the alternating-voltage supply network (1) in particular by way of the rectifier (2) being controlled to a desired value by setting the torque of the electric motor fed by the first inverter (3, 4) as a controlled variable (M_Soll),
the power emitted or received by the second electric motor by way of the second inverter (3, 4) power being effective as a precontrol signal,
with the power of the second inverter (3, 4) being determined by multiplying a current I_ZK_App of the second inverter (3, 4) by a measured DC-link voltage U_ZK_ist.

## Revendications

1. Système, comprenant un redresseur (2) pouvant être alimenté à partir d'un réseau d'alimentation électrique de tension alternative (1), un premier onduleur qui alimente un premier moteur électrique, et un deuxième onduleur qui alimente un deuxième moteur électrique,
dans lequel la borne côté tension continue du premier onduleur (3, 4) est reliée à la borne côté tension continue du redresseur (2),
la borne côté tension continue du deuxième onduleur (3, 4) étant reliée à la borne côté tension continue du redresseur (2),
les deux bornes côté tension continue de l'onduleur (3, 4) étant en particulier connectées en parallèle,
**caractérisé en ce qu'**une unité de réglage, en particulier dans le premier onduleur, est prévue qui est réalisée pour régler la puissance absorbée à partir du réseau d'alimentation de tension alternative (1) par l'intermédiaire du redresseur (2) en direction d'une valeur de consigne en posant le couple du moteur électrique alimenté par le premier onduleur (3, 4) comme grandeur de commande (M_Soll),
l'unité de réglage présentant un chemin de commande pilote de sorte que la puissance fournie ou absorbée par le deuxième moteur électrique par l'intermédiaire du deuxième onduleur (3, 4) agit comme signal de commande pilote,
l'unité de réglage étant en outre réalisée pour déterminer la puissance du deuxième onduleur (3, 4) en multipliant un courant I_ZK_App du deuxième onduleur (3, 4) par une tension de circuit intermédiaire U_ZK_ist mesurée.

2. Système selon la revendication 1, dans lequel un moyen de détection de courant est disposé à l'intérieur du boîtier du premier onduleur (3, 4),
caractérisé, soit en ce que
- le moyen de détection de courant est un moyen pour détecter le courant sortant du redresseur (2) à la borne côté tension continue du redresseur (2),
soit en ce que
- le moyen de détection de courant est un moyen de détection des courants entrants à la borne côté tension alternative du redresseur (2) à partir du réseau d'alimentation électrique de tension alternative (1),
dans lequel, au boîtier du premier onduleur (3, 4), une amenée du courant triphasé côté réseau est rendue possible qui est amené par le moyen de détection de courant et est sorti du boîtier du premier onduleur (3, 4) en direction du boîtier du redresseur (2).

3. Système selon au moins l'une des revendications précédentes, **caractérisé en ce qu'**un moyen de détection du courant sortant à la borne côté tension continue du redresseur (2) est réalisé pour déterminer une valeur I_ZK_N et pour amener la valeur à un moyen de formation de produit qui est réalisé pour multiplier la valeur par la valeur détectée de la tension appliquée à la borne côté tension continue du redresseur (2).

4. Système selon au moins l'une des revendications précédentes, **caractérisé en ce que** la valeur de consigne est aussi petite que possible, en particulier dans la plage moyennée sur une longue période.

5. Système selon au moins l'une des revendications précédentes, **caractérisé en ce que** le redresseur (2) fait partie intégrante du premier onduleur (3, 4), le redresseur (2) étant en particulier enserré ou entouré par le boîtier du premier onduleur (3, 4) en formant un boîtier.

6. Système selon au moins l'une des revendications précédentes, **caractérisé en ce que** l'unité de réglage présente un régulateur linéaire et le chemin de commande pilote,
dans lequel, le régulateur linéaire reçoit comme signal d'entrée la différence entre la puissance détectée ou déterminée, absorbée à partir du réseau d'alimentation de tension continue (1), en particulier la puissance absorbée par l'intermédiaire du redresseur (2), et une valeur de consigne de la puissance absorbée à partir du réseau d'alimentation de tension continue (1),
le signal de commande pilote étant additionné au signal de sortie du régulateur linéaire, et
un signal correspondant à une puissance dissipée du premier moteur électrique est additionné au signal somme ainsi formé, et le signal ainsi formé est amené à un moyen de division qui fournit comme signal de sortie un signal ainsi formé, divisé par un signal correspondant à la vitesse de rotation du premier moteur électrique,
le signal de sortie étant utilisé comme grandeur de commande et correspondant au couple du moteur électrique alimenté par le premier onduleur (3, 4).

7. Système selon au moins l'une des revendications précédentes, **caractérisé en ce que** le régulateur linéaire est un régulateur PI.

8. Système selon au moins l'une des revendications précédentes, **caractérisé en ce que** le signal correspondant à la vitesse de rotation du premier moteur électrique est détecté au moyen d'un capteur de détection de vitesse de rotation et/ou de position qui est disposé sur le premier moteur électrique, ou est déterminé à partir de la valeur détectée du courant de moteur du premier moteur électrique et à partir de la valeur de la tension de moteur détectée ou de la tension détectée à la borne côté tension continue du redresseur (2), en particulier au moyen d'un modèle de machine.

9. Système selon au moins l'une des revendications précédentes, **caractérisé en ce que** la puissance absorbée par le deuxième moteur électrique par l'intermédiaire du deuxième onduleur (3, 4) est formée par la tension détectée à la borne côté tension continue du redresseur (2) et le courant absorbé par le deuxième onduleur (3, 4) et détecté.

10. Système selon au moins l'une des revendications précédentes, **caractérisé en ce que** la puissance absorbée par le premier moteur électrique par l'intermédiaire du premier onduleur (3, 4) est formée à partir de la tension détectée à la borne côté tension continue du redresseur (2) et le courant absorbé par le premier onduleur (3, 4) et détecté.

11. Système selon au moins l'une des revendications précédentes, **caractérisé en ce que** le premier moteur électrique est réalisé sous forme de moteur de ventilateur, le courant d'air de refroidissement débité par le moteur de ventilateur étant guidé le long du deuxième moteur électrique et/ou du deuxième onduleur (3, 4) et/ou à travers le deuxième moteur électrique,
dans lequel en particulier un ventilateur est donc relié de manière verrouillée en rotation à l'arbre de rotor du premier moteur électrique.

12. Système selon au moins l'une des revendications précédentes, **caractérisé en ce que** dans le mode générateur du deuxième moteur électrique, le courant d'air de refroidissement s'accroît, c'est-à-dire augmente en particulier.

13. Système selon au moins l'une des revendications précédentes,
**caractérisé en ce qu'**une électronique de signalisation est réalisée pour générer les signaux de pilotage pour les commutateurs à semi-conducteur de puissance disposés en demi-ponts du premier onduleur (3, 4), et pour générer les signaux de pilotage pour les commutateurs à semi-conducteur de puissance disposés en demi-ponts du deuxième onduleur (3, 4),
ou **en ce qu'**une électronique de signalisation du premier onduleur (3, 4) est reliée au moyen d'un bus de données à l'électronique de signalisation du deuxième onduleur (3, 4) pour l'échange de données.

14. Procédé d'exploitation d'un système, comprenant un redresseur (2) pouvant être alimenté à partir d'un réseau d'alimentation électrique de tension alternative (1), un premier onduleur (3, 4) qui alimente un premier moteur électrique, et un deuxième onduleur (3, 4) qui alimente un deuxième moteur électrique,
le système étant réalisé selon au moins l'une des revendications précédentes,
**caractérisé en ce que** la borne côté tension continue du premier onduleur (3, 4) est reliée à la borne côté tension continue du redresseur (2),
la borne côté tension continue du deuxième onduleur (3, 4) étant reliée à la borne côté tension continue du redresseur (2),
les deux bornes côté tension continue de l'onduleur (3, 4) étant en particulier connectées en parallèle,
en particulier dans lequel une unité de réglage est prévue, en particulier dans le premier onduleur (3, 4),
la puissance absorbée à partir du réseau d'alimentation de tension alternative (1), en particulier par l'intermédiaire du redresseur (2), étant réglée en direction d'une valeur de consigne **en ce que** le couple du moteur électrique alimenté par le premier onduleur (3, 4) est posé comme grandeur de commande (M_Soll),
la puissance fournie ou absorbée par le deuxième moteur électrique par l'intermédiaire du deuxième onduleur (3, 4) agissant comme signal de commande pilote,
la puissance du deuxième onduleur (3, 4) étant déterminée **en ce qu'**un courant I_ZK_App du deuxième onduleur (3, 4) est multiplié par une tension de circuit intermédiaire U_ZK_ist mesurée.
